# EUROPEAN PATENT SPECIFICATION

(11) **EP 4 759 654 B1**
(45) Date of publication and mention of the grant of the patent: **28.10.2026**
(21) Application number: 24219420.7
(22) Date of filing: 12.12.2024
(51) Int. Cl.: B60T 17/08, F16D 65/28

(54) **SPRING BRAKE ACTUATOR FOR A VEHICLE, VEHICLE AND METHOD FOR MANUFACTURING A SPRING BRAKE ACTUATOR**
FEDERSPEICHERBREMSZYLINDER FÜR EIN FAHRZEUG, FAHRZEUG UND VERFAHREN ZUR HERSTELLUNG EINES FEDERSPEICHERBREMSZYLINDERS
ACTIONNEUR DE FREIN À RESSORT POUR UN VÉHICULE, VÉHICULE ET PROCÉDÉ DE FABRICATION D'UN ACTIONNEUR DE FREIN À RESSORT

(43) Date of publication of application: 17.06.2026
(73) Proprietor: ZF CV Systems Europe BV, 1170 Brüssel (BE)
(72) Inventor: FLISEK, Filip, 51-180 Wroclaw (PL)
(74) Representative: Schäferjohann, Volker

(56) References cited:
- EP-B1- 4 269 196
- DE-A1- 102022 104 388
- DE-A1- 3 304 903
- US-A1- 2008 083 325
- US-A1- 2011 315 007
- US-B1- 6 360 649

## Description

The invention relates to a spring brake actuator for a vehicle, a vehicle and a method for manufacturing a spring brake actuator.

A spring brake actuator is a common device in commercial vehicles having pneumatic brake systems. A spring brake actuator typically combines service and parking/emergency braking functions. It typically comprises a spring for parking or emergency braking and a first pressure chamber, wherein a given pressure in the first pressure chamber counteracts the spring. The first pressure chamber is pressurized during normal operation. If the pressure is lost due to a failure or because the vehicle is parked and powered off, the spring is free to act to engage the brake. The spring brake actuator typically further comprises a second pressure chamber for service braking, wherein a given air pressure in the second pressure chamber activates a diaphragm or piston to apply the brake during normal driving. This dual-function design ensures reliable braking performance, providing a fail-safe mechanism that automatically applies the brakes in emergencies or when the vehicle is parked.

A spring brake actuator typically comprises a piston biased by the spring such that the piston transfers force from the spring onto the brake (with typically several moveably elements in between). Furthermore, a spring brake actuator typically comprises a tube which is fixed to the piston. The tube is typically configured to transfer force from the piston to a push rod ultimately actuating the brake. The tube typically houses elements of a mechanical release mechanism.

For fixing the tube to the piston, several connection types have been proposed, including a threaded connection, a press-fit connection, electrode-welding and one-piece casting of the two elements. Threaded connections and press-fit connections typically require additional machining, especially when the piston is manufactured by casting. Electrode-welding can be complicated if the connection is not easily reachable. One-piece casting may also be difficult or impossible, for example due to requirements regarding the inner shape of the tube.

US 6,360,649 B1 discloses a spring brake actuator including a cup-shaped housing, a cover having a rim portion secured to a rim portion of said cup-shaped housing forming an enclosed spring chamber, and a reciprocal piston located within said spring chamber having a peripheral rim portion spaced from an interior surface of said spring chamber. The spring brake actuator further comprises a power spring located within said spring chamber between said cover and said piston and a tubular flexible diaphragm having one open end portion secured between said rim portions of said housing and said cover and a second inverted end portion received around said peripheral rim portion of said piston having an outer annular groove. A flexible band encircles said inverted end portion of said flexible diaphragm received in said annular groove and retains said inverted end portion of said diaphragm to said piston in sealed relation. US 6,360,649 B1 teaches to secure a tubular piston rod to a tubular portion of the piston by tack welding or an interference fit.

It is an object of the invention to provide a simple solution for fixing the piston to the tube even under demanding space constraints.

The object is achieved by a spring brake actuator according to claim 1.

The spring brake actuator is configured for a vehicle and comprises a piston and a tube. The tube is fixed to the piston by a laser welded connection.

This spring brake actuator is easy and cost-efficient to manufacture. In particular, the effort necessary for machining the parts is small. Furthermore, laser welding does not require a physical welding rod or electrode to reach the position that is supposed to be welded at. This enables a design of the piston and/or the tube that adheres better to other requirements, such as a compact design. Furthermore, laser welding allows for a small area of heat impact on the parts. Thus, problems of strong heat impact, such as weakening or introduction of undesired stresses, can be reduced.

According to an embodiment, the laser welded connection comprises a weld seam, which is annular. This makes the connection strong and still simple to produce.

According to an embodiment, the weld seam surrounds the tube. This not only provides for a strong connection but also makes the connection airtight. The weld seam surrounding the tube constitutes a sealing and, thus, it is possible to avoid any further sealing means, such as chemical sealants, between the tube and the piston. This not only avoids the costs for such materials but also for an additional process step for applying such materials.

According to an embodiment, the piston comprises a recess. The piston is typically movable between a first position or release position and a second position or braking position. The spring brake actuator may be configured such that the recess receives a protrusion when the piston moves into the second position. Thus, the recess adds to a compact design of the spring brake actuator. The protrusion may be part of a first housing element of the spring brake actuator. The protrusion may surround an aperture of the first housing element, wherein the tube extends through and/or is configured to move through the aperture of the first housing element. The spring brake actuator may comprise a seal ring in the aperture and/or between the tube and the first housing element. The recess may be bell-shaped. The tube may extend, in part, through the recess.

The laser welded connection may preferably be positioned at a deep end of the recess. The laser welding allows for a compact design, including the recess, while still providing for a simple and durable connection.

According to an embodiment, the piston comprises a hub, wherein the tube is positioned partly inside the hub. This further simplifies the fixing process as it simplifies positioning of the tube relative to the piston. The hub may preferably be positioned adjacent to the recess and/or at a deep end of the recess.

The hub may be tapered. Preferably, the hub tapers away from a deep end of the recess and/or towards a deep end of the hub.

The hub may comprise a draft angle. That means that the hub is, at least in part, conical. The hub and/or the draft angle may preferably be not machined. In case the piston is made by casting, a draft angle simplifies this process. Leaving a draft angle in the hub and/or not machining the hub after the primary shaping process, simplifies manufacturing the spring brake actuator, since an additional machining step is not necessary. Yet, the laser welded connection provides for a reliable connection between the tube and the piston.

According to an embodiment, the piston comprises a hub and a shoulder, wherein the hub comprises a deep end of the hub, wherein the deep end of the hub is defined by the shoulder, and wherein the tube abuts the shoulder. The shoulder can, thus, serve as a reference for positioning the tube relative to the piston during the laser welding process. This further simplifies the manufacturing process.

The spring brake actuator may preferably comprise a mechanical release mechanism. A mechanical release mechanism in a spring brake actuator allows manual release of the parking or emergency brake when air pressure is unavailable, such as during maintenance, towing, or air system failure. Spring brake actuators use a powerful spring to apply the brakes when air pressure is lost, locking the wheels for safety. The mechanical release, often a caging bolt or similar tool, compresses the spring manually, disengaging the brake and allowing the vehicle to be moved. This mechanism ensures the vehicle remains operable even in situations where the air system cannot function.

According to an embodiment, the spring brake actuator comprises a mechanical release mechanism, wherein the mechanical release mechanism comprises a bolt and wherein the piston comprises an aperture. The bolt may extend through the aperture into the tube. This provides for a compact design. The aperture may be positioned adjacent to the hub and/or at a deep end of the hub.

The piston may comprise a hub and an aperture. The piston may comprise a shoulder between the aperture and the hub. The shoulder may be configured for interacting with a mechanical release mechanism to move the piston. This allows for a simple design of the mechanical release mechanism.

According to an embodiment, the spring brake actuator comprises a first pressure chamber and the laser welded connection faces the first pressure chamber. This allows for a simple and compact design of the piston-tube-assembly.

In general, the piston can be manufactured in various ways and/or made from various materials. The piston can, for example, be made from sheet metal, preferably steel sheet metal. This piston can be made from sheet metal by deep drawing, for example. The piston may be made from aluminum or an aluminum alloy. These materials are relatively easy to laser weld and allow for a compact and rigid design.

The term "aluminum alloy" generally refers to an alloy in which aluminum is the predominant metal.

In general, the tube may be manufactured in various ways and/or from various materials. According to an embodiment, the tube is made from aluminum or an aluminum alloy. These materials are relatively easy to laser weld and allow for a compact and rigid design.

The spring brake actuator may comprise a mechanical release mechanism. The mechanical release mechanism may be positioned partly inside the tube. For example, the spring brake actuator may comprise a threaded bolt and a nut positioned on and movable along the threaded bolt. Both the threaded bolt and the nut may be positioned inside the tube, for example at least when the piston is in a first position or release position.

The spring brake actuator may comprise a first spring biasing the piston towards a second position of the piston. The second position of the piston may correspond to the spring brake actuator holding the brake closed. The second position of the piston may be referred to as a braking position. The spring brake actuator may be configured such that the piston assumes the second position if the vehicle equipped with the spring brake actuator is not in service or not powered up and/or in case of pressure loss in a pneumatic braking system of the vehicle.

The spring brake actuator may comprise a first pressure chamber or parking chamber and may be configured such that a given pressure in the first pressure chamber biases the piston towards a first position or release position. The spring brake actuator may be configured such that the piston assumes the second position, if there is no pressure in the first pressure chamber. The piston may limit the first pressure chamber.

The spring brake actuator may comprise a push rod that may be movable and may be configured to be connected to a brake. The push rod may comprise a first position or release position corresponding to the brake being open. The spring brake actuator may comprise a second spring biasing the push rod towards the first position. The push rod may comprise a second position or braking position corresponding to the brake being closed. The push rod may extend out of the spring brake actuator, at least in the second position of the push rod. The spring brake actuator may be configured such that the first spring biases the push rod towards its second position via the piston and the tube. The spring brake actuator may comprise a second pressure chamber or service chamber. The spring brake actuator may be configured such that a pressure in the second pressure chamber biases the push rod towards its second position. The spring brake actuator may comprise a diaphragm between the push rod and the second pressure chamber.

The object is also achieved by a vehicle according to claim 12. This vehicle comprises a brake and a spring brake actuator as described above. The spring brake actuator is configured to actuate the brake.

The vehicle can be, for example, a commercial vehicle, a truck, a passenger car or a bus. The vehicle can be, for example, a road vehicle or a rail vehicle. The vehicle can be, for example, a single vehicle, a tractor for a tractor-trailer combination or a tractor-trailer combination.

The object is also achieved by a method according to claim 13. This method is employed in the manufacture of a spring brake actuator comprising a piston and a tube. The method comprises fixing the tube to the piston by means of laser welding. The spring brake actuator may be configured as described above.

The method may comprise casting the piston. This is a simple primary forming process and allows for a compact and rigid design. Casting as a primary forming process for the piston offers significant advantages, including the ability to produce complex shapes with intricate geometries that would be challenging or impossible to achieve through other methods. It is highly versatile, accommodating a wide range of materials, including metals and alloys, while minimizing material wastage. Additionally, it often requires minimal machining or finishing, reducing production costs, and can create a piston with tailored properties by carefully controlling cooling rates and alloy compositions.

The method may comprise drawing the tube. Drawing as a primary forming process for the tube offers several advantages, including high dimensional accuracy and the ability to produce a tube with tight tolerances and smooth surfaces, minimizing the need for finishing. It enhances material properties through work hardening, improving strength, hardness, and fatigue resistance while refining the grain structure.

The method may comprise forming a recess and a hub in the piston and inserting the tube into the hub through the recess, wherein laser welding may include sending a laser beam through the recess. This method is simple but allows for a compact design.

Any ordinal numbers used herein merely simplify reference and are not to be construed as limiting with respect to the total number of elements for which the ordinal numbers are used. In particular, the existence of the second element does not necessarily mean that a first element exists.

If devices and methods are described herein, the methods described can advantageously be developed further by the embodiments and individual features of the devices, and vice versa.

The invention is described in more detail below with reference to examples, which are shown in schematic drawings.
Fig. 1 shows a spring brake actuator in a sectional view.
Fig. 2 shows a part of the spring brake actuator of Fig. 1 in more detail.
Fig. 3 shows a piston and a tube of the spring brake actuator of Fig. 1 in a perspective view.
Fig. 4 shows a vehicle.
Fig. 5 illustrates a method for manufacturing a spring brake actuator.

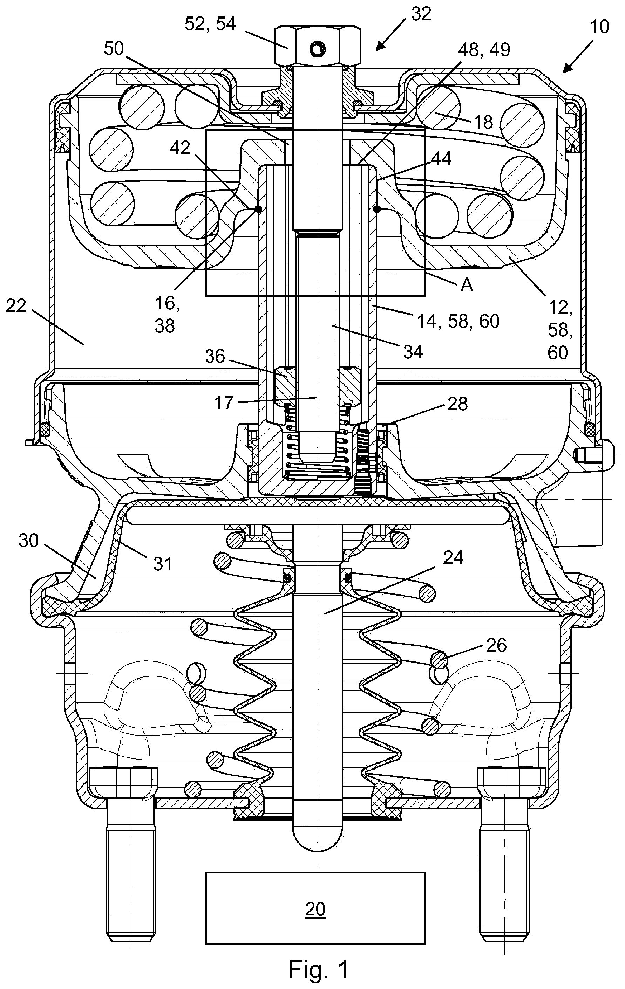

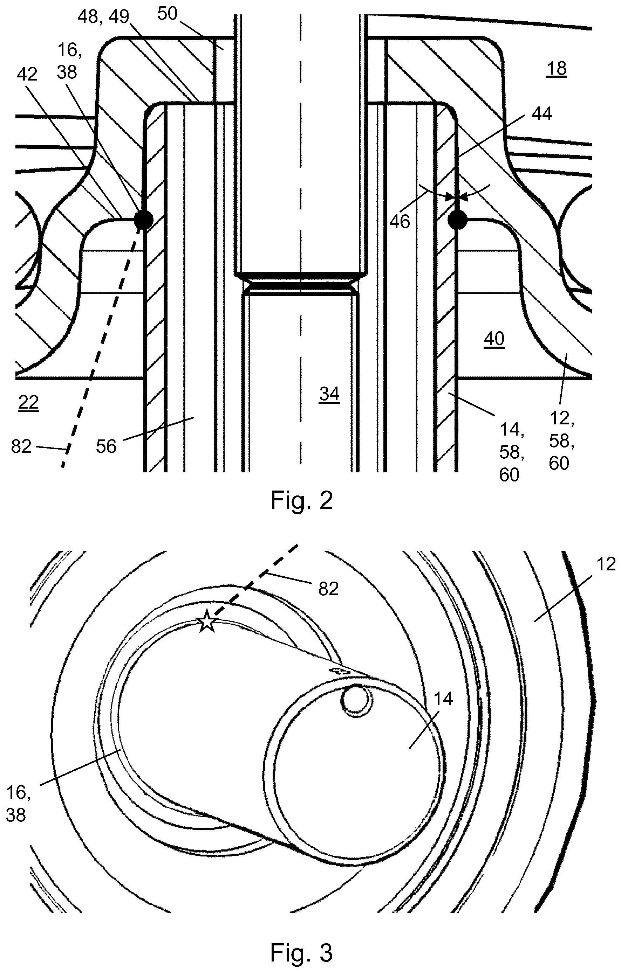

Fig. 1 shows a spring brake actuator 10 in a sectional view. Fig. 1 indicates area A that is shown in Fig. 2 in more detail. Figs. 1 and 2 will be described together unless specific reference is made.

The spring brake actuator 10 of Figs. 1 and 2 comprises a piston 12 and a tube 14. The tube 14 is fixed to the piston 16 by a laser welded connection 16.

The piston 12 is movable along a central axis 17 which is arranged vertically in Fig. 1. Fig. 1 shows the piston 12 in a first position of the piston 12. It will be apparent that the piston 12 and the tube 14 will move together, since the tube 14 is fixed to the piston 12. For the sake of simplicity, movement and positions of the two will be explained only with reference to the piston, unless specific reference is made to the tube 14.

The spring brake actuator 10 comprises a first spring 18 biasing the piston 12 towards a second position of the piston 12. In Fig. 1, the first spring 18 biases the piston 12 downwards. The second position of the piston 12 is not shown separately. The second position corresponds to the spring brake actuator 10 holding a brake 20 closed, as will be described in more detail below. The second position of the piston 12 may be referred to as a braking position. The spring brake actuator 10 is configured such that the piston 12 assumes the second position if a vehicle equipped with the spring brake actuator 10 is not in service or not powered up.

The spring brake actuator 10 comprises a first pressure chamber 22 or parking chamber and is configured such that a given pressure in the first pressure chamber 22 biases the piston 12 towards its first position or release position. Thus, a given pressure in the first pressure chamber 22 generally biases the piston 12 upwards with respect to Fig. 1. The spring brake actuator 10 is configured such that the piston 12 assumes the second position, if there is no pressure in the first pressure chamber 22. The piston 12 limits the first pressure chamber 22. The laser welded connection 16 faces the first pressure chamber 22.

The spring brake actuator 10 comprises a push rod 24 that is movable along the central axis 17, i.e. vertically with respect to Fig. 1. The push rod 24 is configured to be connected to the brake 20. The push rod 24 comprises a first position or release position corresponding to the brake 20 being released. Fig. 1 shows the push rod 24 in the first position.

The spring brake actuator 10 comprises a second spring 26 biasing the push rod 24 towards the first position, upwards in Fig. 1. The push rod 24 may comprise a second position or braking position corresponding to the brake 20 being closed. The second position of the push rod 24 is not shown separately.

The push rod 12 extends out of the spring brake actuator 10, at least in the second position of the push rod 24. The spring brake actuator 10 is configured such that the first spring 18 biases the push rod 24 towards its second position via the piston 12 and the tube 14. The tube 14 extends through and is movable through a first aperture 28 and transfers force from the piston 12 onto the push rod 24.

The spring brake actuator 10 comprises a second pressure chamber 30 or service chamber. The spring brake actuator 10 is configured such that a pressure in the second pressure chamber 30 biases the push rod 24 towards its second position. The spring brake actuator 10 comprises a diaphragm 31 between the push rod 24 and the second pressure chamber 30.

The spring brake actuator 10 may comprise a mechanical release mechanism 32. The mechanical release mechanism 32 is positioned partly inside the tube 14. In particular, the mechanical release mechanism 32 comprises a threaded bolt 34 and a nut 36 positioned on and movable along the threaded bolt 34. Both the threaded bolt 34 and the nut 36 are positioned inside the tube 14 at least when the piston 12 is in the first position or release position.

As explained above, in the spring brake actuator 10 of Figs. 1 and 2 the tube 14 is fixed to the piston 12 by a laser welded connection 16. Fig. 3 shows the piston 12 and the tube 14 in a perspective view. As can be best seen in Fig. 3, the laser welded connection 16 comprises a weld seam 38, which is annular. The weld seam 38 surrounds the tube 14.

The piston 12 comprises a recess 40, as visible in Figs. 1 and 2. The laser welded connection 16 is positioned at a deep end 42 of the recess 40.

The piston 12 comprises a hub 44 as visible in Figs. 1 and 2. The tube 14 is positioned partly inside the hub 44. The hub 44 is tapered. It comprises a draft angle 46 indicated in Fig. 1. The hub 44 and/or the draft angle 46 may preferably be not machined. The hub 44 tapers away from the deep end 42 of the recess 40.

The piston 12 comprises a shoulder 48. A deep end 49 of the hub 44 is defined by the shoulder 48. The tube 14 abuts the shoulder 48.

The piston 12 comprises a second aperture 50. The bolt 34 extends through the second aperture 50 into the tube 14. The second aperture 50 is positioned adjacent to the hub 44 and at the deep end 49 of the hub 44. The shoulder 48 is arranged between the aperture 50 and the hub 44.

The shoulder 48 is configured for interacting with the mechanical release mechanism 32, in particular with the nut 36 of the mechanical release mechanism 32, to move the piston 12. In order to manually release the brake 20 in absence of pressure in the first pressure chamber 22 by means of the mechanical release mechanism 32, the threaded bolt 34 can be turned by applying a torque to a tool interface 52. In this example, the tool interface 52 is an external hexagon 54. The tube 14 comprises an interior shape 56 that is configured to prevent the nut 36 from turning. Instead, the nut 36 will move relative to and along the threaded bolt 34. At some point, the nut 36 will abut the shoulder 48 and by turning the threaded bolt 34 further, the piston 12 can be pulled against the force of the first spring 18 and towards its first position, i.e. the position of the piston 12 as shown in Fig. 1.

The piston 12 may preferably be made from aluminum 58 or an aluminum alloy 60. The tube may preferably be made from aluminum 58 or an aluminum alloy 60.

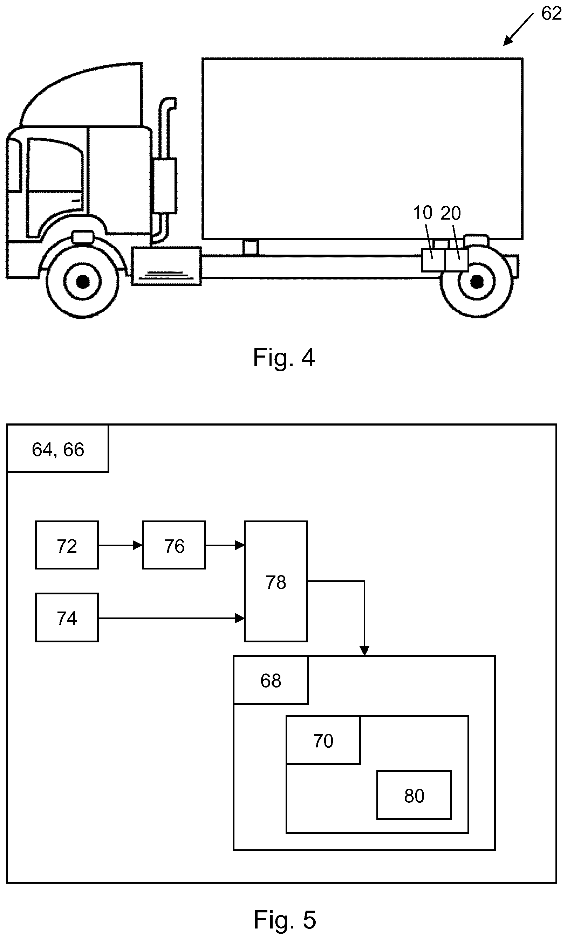

Fig. 4 shows a vehicle 62 comprising a brake 20 and a spring brake actuator 10 configured to actuate the brake 20. The spring brake actuator 10 may be configured like the one shown in Figs. 1 to 3.

Fig. 5 illustrates a method 64 for manufacturing 66 a spring brake actuator, for example a spring brake actuator 10 as shown in Figs. 1 to 3. The spring brake actuator comprises a piston and a tube (not shown in Fig. 5). The method 64 comprises fixing 68 the tube to the piston by means of laser welding 70.

The method 64 shown in Fig. 5 further comprises casting 72 the piston. The method 64 shown in Fig. 5 further comprises drawing 74 the tube.

The method 64 shown in Fig. 5 further comprises forming 76 a recess and a hub in the piston. The method 64 shown in Fig. 5 further comprises inserting 78 the tube into the hub through the recess. The method 64 shown in Fig. 5 further comprises sending 80 a laser beam through the recess as part of the laser welding 70.

Figs. 2 and 3 further illustrate a possible orientation of a laser beam 82 at the step of sending 80 a laser beam through the recess. While Fig. 2 shows the spring brake actuator 10 in complete assembly, it will be apparent that the laser welding will preferably be performed before the final assembly of the spring brake actuator 10.

Where similar or identical elements are shown in different figures, reference numerals are assigned accordingly. Multiple descriptions of similar or identical elements have been avoided for the sake of clarity. Nevertheless, the embodiments of the figures can be combined with each other and developed further in accordance with the other embodiments and/or their individual features.

### List of references (part of the description)

- 10: spring brake actuator
- 12: piston
- 14: tube
- 16: laser welded connection
- 17: central axis
- 18: first spring
- 20: brake
- 22: first pressure chamber
- 24: push rod
- 26: second spring
- 28: first aperture
- 30: second pressure chamber
- 31: diaphragm
- 32: mechanical release mechanism
- 34: threaded bolt
- 36: nut
- 38: weld seam
- 40: recess
- 42: deep end
- 44: hub
- 46: draft angle
- 48: shoulder
- 49: deep end
- 50: second aperture
- 52: tool interface
- 54: external hexagon
- 56: interior shape
- 58: aluminum
- 60: aluminum alloy
- 62: vehicle
- 64: method
- 66: manufacturing
- 68: fixing
- 70: laser welding
- 72: casting
- 74: drawing
- 76: forming
- 78: inserting
- 80: sending
- 82: laser beam

## Claims

1. Spring brake actuator (10) for a vehicle (62),
wherein the spring brake actuator (10) comprises a piston (12),
wherein the spring brake actuator (10) comprises a tube (14),
wherein the tube (14) is fixed to the piston (12),
**characterized in that**
the tube (14) is fixed to the piston (12) by a laser welded connection (16).

2. Spring brake actuator (10) according to claim 1,
wherein the laser welded connection (16) comprises a weld seam (48), which is annular.

3. Spring brake actuator (10) according to claim 2,
wherein the weld seam (48) surrounds the tube (14).

4. Spring brake actuator (10) according to one of the preceding claims,
wherein the piston (12) comprises a recess (40),
wherein the laser welded connection (16) is positioned at a deep end (42) of the recess (40).

5. Spring brake actuator (10) according to one of the preceding claims,
wherein the piston (12) comprises a hub (44),
wherein the tube (14) is positioned partly inside the hub (44).

6. Spring brake actuator (10) according to claim 5,
wherein the hub (44) is tapered and/or comprises a draft angle (46).

7. Spring brake actuator (10) according to one of the preceding claims,
wherein the piston (12) comprises a hub (44),
wherein the piston (12) comprises a shoulder (48),
wherein the hub (44) comprises a deep end (49) of the hub (44),
wherein the deep end (49) of the hub (44) is defined by the shoulder (48),
wherein the tube (14) abuts the shoulder (48).

8. Spring brake actuator (10) according to one of the preceding claims,
wherein the spring brake actuator (10) comprises a mechanical release mechanism (32),
wherein the mechanical release mechanism (32) comprises a bolt (34),
wherein the piston (12) comprises an aperture (50),
wherein the bolt (34) extends through the aperture (50) into the tube (14).

9. Spring brake actuator (10) according to one of the preceding claims,
wherein the piston (12) comprises a hub (44),
wherein the piston (12) comprises an aperture (50),
wherein the piston (12) comprises a shoulder (48) between the aperture (50) and the hub (44),
wherein the shoulder (48) is configured for interacting with a mechanical release mechanism (32) to move the piston (12).

10. Spring brake actuator (10) according to one of the preceding claims,
wherein the spring brake actuator (10) comprises a first pressure chamber (22),
wherein the laser welded connection (16) faces the first pressure chamber (22).

11. Spring brake actuator (10) according to one of the preceding claims,
wherein the piston (12) is made from aluminum (58) or an aluminum alloy (60) and/or
wherein the tube (14) is made from aluminum (58) or an aluminum alloy (60).

12. Vehicle (62),
wherein the vehicle (62) comprises a brake (20),
wherein the vehicle (62) comprises a spring brake actuator (10) in accordance with one of the preceding claims,
wherein the spring brake actuator (10) is configured to actuate the brake (20).

13. Method (64) for manufacturing (66) a spring brake actuator (10),
the spring brake actuator (10) comprising a piston (12) and a tube (14),
the method (64) comprising fixing the tube (14) to the piston (12) by means of laser welding (70).

14. Method (64) according to claim 13, the method (64) further comprising: casting (72) the piston (12) and/or drawing (74) the tube (14).

15. Method (64) according to one of claims 13 to 14,
the method (64) further comprising:
forming (76) a recess (40) and a hub (44) in the piston (12);
inserting (78) the tube (14) into the hub (44) through the recess (40);
wherein laser welding (70) includes sending a laser beam (82) through the recess (40).

## Patentansprüche

1. Federspeicherbremszylinder (10) für ein Fahrzeug (62),
wobei der Federspeicherbremszylinder (10) einen Kolben (12) umfasst,
wobei der Federspeicherbremszylinder (10) ein Rohr (14) umfasst,
wobei das Rohr (14) an dem Kolben (12) befestigt ist,
**dadurch gekennzeichnet, dass**
das Rohr (14) über eine lasergeschweißte Verbindung (16) an dem Kolben (12) befestigt ist.

2. Federspeicherbremszylinder (10) nach Anspruch 1,
wobei die lasergeschweißte Verbindung (16) eine Schweißnaht (48) umfasst, die ringförmig ist.

3. Federspeicherbremszylinder (10) nach Anspruch 2,
wobei die Schweißnaht (48) das Rohr (14) umgibt.

4. Federspeicherbremszylinder (10) nach einem der vorstehenden Ansprüche,
wobei der Kolben (12) eine Aussparung (40) umfasst,
wobei die lasergeschweißte Verbindung (16) an einem tiefen Ende (42) der Aussparung (40) positioniert ist.

5. Federspeicherbremszylinder (10) nach einem der vorstehenden Ansprüche,
wobei der Kolben (12) eine Nabe (44) umfasst,
wobei das Rohr (14) teilweise innerhalb der Nabe (44) positioniert ist.

6. Federspeicherbremszylinder (10) nach Anspruch 5,
wobei die Nabe (44) verjüngt ist und/oder eine Entformungsschräge (46) umfasst.

7. Federspeicherbremszylinder (10) nach einem der vorstehenden Ansprüche,
wobei der Kolben (12) eine Nabe (44) umfasst,
wobei der Kolben (12) eine Schulter (48) umfasst,
wobei die Nabe (44) ein tiefes Ende (49) der Nabe (44) umfasst,
wobei das tiefe Ende (49) der Nabe (44) über die Schulter (48) definiert ist,
wobei das Rohr (14) an der Schulter (48) anliegt.

8. Federspeicherbremszylinder (10) nach einem der vorstehenden Ansprüche,
wobei der Federspeicherbremszylinder (10) einen mechanischen Entriegelungsmechanismus (32) umfasst,
wobei der mechanische Entriegelungsmechanismus (32) einen Bolzen (34) umfasst,
wobei der Kolben (12) eine Öffnung (50) umfasst,
wobei sich der Bolzen (34) durch die Öffnung (50) in das Rohr (14) erstreckt.

9. Federspeicherbremszylinder (10) nach einem der vorstehenden Ansprüche,
wobei der Kolben (12) eine Nabe (44) umfasst,
wobei der Kolben (12) eine Öffnung (50) umfasst,
wobei der Kolben (12) eine Schulter (48) zwischen der Öffnung (50) und der Nabe (44) umfasst,
wobei die Schulter (48) zum Zusammenwirken mit einem mechanischen Entriegelungsmechanismus (32) konfiguriert ist, um den Kolben (12) zu bewegen.

10. Federspeicherbremszylinder (10) nach einem der vorstehenden Ansprüche,
wobei der Federspeicherbremszylinder (10) eine erste Druckkammer (22) umfasst,
wobei die lasergeschweißte Verbindung (16) der ersten Druckkammer (22) zugewandt ist.

11. Federspeicherbremszylinder (10) nach einem der vorstehenden Ansprüche,
wobei der Kolben (12) aus Aluminium (58) oder einer Aluminiumlegierung (60) hergestellt ist und/oder
wobei das Rohr (14) aus Aluminium (58) oder einer Aluminiumlegierung (60) hergestellt ist.

12. Fahrzeug (62),
wobei das Fahrzeug (62) eine Bremse (20) umfasst,
wobei das Fahrzeug (62) einen Federspeicherbremszylinder (10) nach einem der vorstehenden Ansprüche umfasst,
wobei der Federspeicherbremszylinder (10) konfiguriert ist, um die Bremse (20) zu betätigen.

13. Verfahren (64) zum Fertigen (66) eines Federspeicherbremszylinders (10),
der Federspeicherbremszylinder (10) umfassend einen Kolben (12) und ein Rohr (14),
das Verfahren (64) umfassend ein Befestigen des Rohrs (14) an dem Kolben (12) mittels Laserschweißen (70).

14. Verfahren (64) nach Anspruch 13, das Verfahren (64) ferner umfassend:
Gießen (72) des Kolbens (12) und/oder Ziehen (74) des Rohrs (14).

15. Verfahren (64) nach einem der Ansprüche 13 bis 14,
das Verfahren (64) ferner umfassend:
Ausbilden (76) einer Aussparung (40) und einer Nabe (44) in dem Kolben (12);
Einführen (78) des Rohrs (14) in die Nabe (44) durch die Aussparung (40);
wobei das Laserschweißen (70) ein Senden eines Laserstrahls (82) durch die Aussparung (40) einschließt.

## Revendications

1. Actionneur de frein à ressort (10) pour un véhicule (62),
dans lequel l'actionneur de frein à ressort (10) comprend un piston (12),
dans lequel l'actionneur de frein à ressort (10) comprend un tube (14),
dans lequel le tube (14) est fixé au piston (12),
**caractérisé en ce que**
le tube (14) est fixé au piston (12) par une liaison par soudage laser (16).

2. Actionneur de frein à ressort (10) selon la revendication 1,
dans lequel la liaison par soudage laser (16) comprend un cordon de soudure (48), qui est annulaire.

3. Actionneur de frein à ressort (10) selon la revendication 2,
dans lequel le cordon de soudure (48) entoure le tube (14).

4. Actionneur de frein à ressort (10) selon l'une quelconque des revendications précédentes,
dans lequel le piston (12) comprend un évidement (40),
dans lequel la liaison par soudage laser (16) est positionnée à une extrémité profonde (42) de l'évidement (40).

5. Actionneur de frein à ressort (10) selon l'une quelconque des revendications précédentes,
dans lequel le piston (12) comprend un moyeu (44),
dans lequel le tube (14) est positionné partiellement à l'intérieur du moyeu (44).

6. Actionneur de frein à ressort (10) selon la revendication 5,
dans lequel le moyeu (44) est effilé et/ou comprend un angle de dépouille (46).

7. Actionneur de frein à ressort (10) selon l'une quelconque des revendications précédentes,
dans lequel le piston (12) comprend un moyeu (44),
dans lequel le piston (12) comprend un épaulement (48),
dans lequel le moyeu (44) comprend une extrémité profonde (49) du moyeu (44),
dans lequel l'extrémité profonde (49) du moyeu (44) est définie par l'épaulement (48),
dans lequel le tube (14) vient en butée contre l'épaulement (48).

8. Actionneur de frein à ressort (10) selon l'une quelconque des revendications précédentes,
dans lequel l'actionneur de frein à ressort (10) comprend un mécanisme de libération mécanique (32),
dans lequel le mécanisme de libération mécanique (32) comprend un boulon (34),
dans lequel le piston (12) comprend une ouverture (50),
dans lequel le boulon (34) s'étend à travers l'ouverture (50) dans le tube (14).

9. Actionneur de frein à ressort (10) selon l'une quelconque des revendications précédentes,
dans lequel le piston (12) comprend un moyeu (44),
dans lequel le piston (12) comprend une ouverture (50),
dans lequel le piston (12) comprend un épaulement (48) entre l'ouverture (50) et le moyeu (44),
dans lequel l'épaulement (48) est configuré pour interagir avec un mécanisme de libération mécanique (32) pour déplacer le piston (12).

10. Actionneur de frein à ressort (10) selon l'une quelconque des revendications précédentes,
dans lequel l'actionneur de frein à ressort (10) comprend une première chambre de pression (22),
dans lequel la liaison par soudage laser (16) fait face à la première chambre de pression (22).

11. Actionneur de frein à ressort (10) selon l'une quelconque des revendications précédentes,
dans lequel le piston (12) est réalisé en aluminium (58) ou en un alliage d'aluminium (60) et/ou
dans lequel le tube (14) est fait d'aluminium (58) ou d'un alliage d'aluminium (60).

12. Véhicule (62),
dans lequel le véhicule (62) comprend un frein (20),
dans lequel le véhicule (62) comprend un actionneur de frein à ressort (10) selon l'une des revendications précédentes,
dans lequel l'actionneur de frein à ressort (10) est configuré pour actionner le frein (20).

13. Procédé (64) permettant de fabriquer (66) un actionneur de frein à ressort (10),
l'actionneur de frein à ressort (10) comprenant un piston (12) et un tube (14),
le procédé (64) comprenant la fixation du tube (14) au piston (12) au moyen d'un soudage laser (70).

14. Procédé (64) selon la revendication 13, le procédé (64) comprenant en outre :
le moulage par coulée (72) du piston (12) et/ou l'étirage (74) du tube (14).

15. Procédé (64) selon l'une quelconque des revendications 13 à 14,
le procédé (64) comprenant en outre :
la formation (76) d'un évidement (40) et d'un moyeu (44) dans le piston (12) ;
l'insertion (78) du tube (14) dans le moyeu (44) à travers l'évidement (40) ;
dans lequel le soudage laser (70) comporte l'envoi d'un faisceau laser (82) à travers l'évidement (40).
